(19) Europäisches Patentamt / European Patent Office / Office européen des brevets

(11) **EP 1 982 162 B1**

(12) **EUROPÄISCHE PATENTSCHRIFT**

(45) Veröffentlichungstag und Bekanntmachung des Hinweises auf die Patenterteilung:
**02.01.2019   Patentblatt 2019/01**

(21) Anmeldenummer: **07702966.8**

(22) Anmeldetag: **23.01.2007**

(51) Int Cl.:
*G01N 21/898* (2006.01)        *D05C 15/08* (2006.01)
*D06H 3/08* (2006.01)          *B65H 26/02* (2006.01)

(86) Internationale Anmeldenummer:
**PCT/EP2007/000557**

(87) Internationale Veröffentlichungsnummer:
**WO 2007/090516 (16.08.2007 Gazette 2007/33)**

(54) **VORRICHTUNG UND VERFAHREN ZUM STEUERN EINER TUFTINGANLAGE SOWIE ENTSPRECHENDE TUFTINGANLAGE**

APPARATUS AND METHOD FOR CONTROLLING A TUFTING INSTALLATION AND CORRESPONDING TUFTING INSTALLATION

DISPOSITIF ET PROCEDE DE COMMANDE D'UNE INSTALLATION DE TUFTAGE ET INSTALLATION DE TUFTAGE

(84) Benannte Vertragsstaaten:
**BE DE**

(30) Priorität: **06.02.2006   DE 102006005317**

(43) Veröffentlichungstag der Anmeldung:
**22.10.2008   Patentblatt 2008/43**

(73) Patentinhaber: **PROTECHNA Herbst GmbH & Co. KG**
**85579 Neubiberg (DE)**

(72) Erfinder:
• **FERCHAU, Alfred**
  **60389 Frankfurt (DE)**
• **STRUVE, Klaus Dieter**
  **24613 Aukrug (DE)**
• **BONGRATZ, Rainer**
  **83620 Feldkirchen-Westerham (DE)**

(74) Vertreter: **Frese Patent - Patentanwälte**
**Fitzner & Frese PartGmbB**
**Hüttenallee 237b**
**47800 Krefeld (DE)**

(56) Entgegenhaltungen:
| EP-A1- 0 303 722 | EP-A2- 0 352 655 |
| DE-A1- 2 920 050 | JP-A- H04 240 257 |
| JP-A- 2004 346 456 | US-A- 3 395 432 |
| US-A- 5 550 384 | |

EP 1 982 162 B1

**Beschreibung**

Die vorliegende Erfindung betrifft eine Vorrichtung und ein Verfahren zum Steuern einer Tuftinganlage, wobei die Tuftinganlage eine Tuftingmaschine zum Herstellen einer flächigen Tuftingbahn, eine Walzenanordnung zum Führen der Tuftingbahn und eine Warenabzugeinrichtung zum Aufwickeln der von der Walzenanordnung geführten Tuftingbahn aufweist.

Tufting ist eines der gängigen Produktionsverfahren zur Herstellung von textilen Flächengebilden, insbesondere Teppichen. Dabei stechen vertikal bewegte, an einer Nadelbarre angeordnete Nadeln einen Polmaterial-Faden von oben in ein zugeführtes flächiges Trägermaterial, vorzugsweise ein gewebtes Trägermaterial oder ein fließartiges Trägermaterial. Beim Zurückziehen der Nadel bildet sich an jeder Nadel auf der Vorderseite der Tufting-Ware eine Schlinge, die von einem Greifer, auch "Looper" genannt, festgehalten wird. Die Nadeln sind üblicherweise im Abstand weniger Millimeter auf der sich über mehrere Meter erstreckenden Nadelbarre befestigt und werden gemeinsam bewegt. Wird der Teppich als Velours produziert, was heutzutage etwa 70 bis 80% der Produktion ausmacht, so werden die Polmaterial-Schlingen mittels wenigstens eines zyklisch bewegten Messers aufgeschnitten, solange sie sich noch auf den Greifern befinden.

Im Rahmen der Herstellung von Tufting-Ware auf einer Tuftinganlage kommt es häufig zu Fehlern, die relativ schnell erkannt werden müssen, um die Produktion von Ausschussware möglichst gering zu halten. Ein häufig auftretender Fehler besteht darin, dass ein Polmaterial-Faden reißt. Derartige Fehler werden als "Fadenbruch" bezeichnet. Es ist bereits bekannt, von einer Tuftingmaschine ausgehende Tuftingbahnen optisch zu überwachen und bei Erfassung einer Fehlerstelle ein optisches oder akustisches Signal auszugeben. Hierzu wird verwiesen auf US 5,550,384, wo eine entsprechende Scannvorrichtung beschrieben ist. Nach dem Erkennen einer Fehlerstelle muss eine Bedienungsperson, die durch dieses Signal auf das Auftreten eines Fehlers bei der Herstellung der Tuftingbahn aufmerksam gemacht wurde, an einem Reparaturbereich innerhalb der Walzenanordnung die Tuftingbahn solange inspizieren, bis der Produktionsfehler in den Reparaturbereich eingetreten ist. Sodann stoppt die Bedienungsperson die Anlage oder zumindest die Warenabzugeinrichtung und repariert den im Reparaturbereich befindlichen Fehler manuell mittels eines Handtuftgerätes.

Aus EP 0 303 722 A1 ist ferner eine Vorrichtung zum Erfassen eines Fehlers einer Stoffbahn im Rahmen einer Fehlerschau bekannt, bei der der Fehler dadurch registriert wird, dass dessen Position in X-Richtung durch eine auf der Stoffbahn gesetzten Marke und mindestens eine weitere Positionsangabe zusammen mit einer Bezeichnung der Marke festgehalten wird.

DE 29 20 050 A1 beschreibt ein Verfahren zur Fehlererkennung an Flachmaterialien, bei dem eine Oberfläche der Flachmaterials mit einer elektrischen Abtasteinrichtung abgetastet wird, die ein den Merkmalen der Oberfläche entsprechendes elektrisches Ausgangssignal erzeugt. Dieses elektrische Ausgangssignal wird zum Erkennen von für einen Fehler der Ware repräsentativen Abweichungen einer Norm ausgewertet.

EP 0 352 655 A2 betrifft ein Steuergerät zur Steuerung einer Antriebsanlage für eine Materialbahn, bei der diese einer Oberflächenuntersuchung unterzogen wird. Wird eine bestimmte Oberflächenbedingung auf der Materialbahn erfasst, so wird dieser Teil der Materialbahn an einer vorbestimmten Station angehalten.

JP 04240257 A offenbart eine Fernbedienung für eine Webmaschine. Im Hinblick auf den Zeitpunkt der Reparatur ist anzumerken, dass sich die Tuftingbahn in der Regel mit einer Geschwindigkeit von einigen Metern pro Minute von der Tuftingmaschine ausgehend durch die Walzenanordnung bewegt. Darüber hinaus ist anzumerken, dass die Walzenanordnung bei heutigen Tuftinganlagen häufig über eine Bahnlängen-Puffereinrichtung verfügt, um die Warenabzugeinrichtung nur periodisch betreiben zu müssen. Je nach Füllstand der Bahnlängen-Puffereinrichtung kommt es jedoch zu unterschiedlichen Laufzeiten bis die nahe der Tuftingmaschine erfasste Fehlerstelle in den Reparaturbereich gelangt. Die Bedienungsperson kann sich daher nicht darauf verlassen, dass nach einer ganz bestimmten Zeitperiode die Fehlerstelle in den Reparaturbereich eintritt. Vielmehr wird die Zeitperiode zwischen Erfassung der Fehlerstelle und ihrem Eintreten in den Reparaturbereich nach Maßgabe des Füllzustands der Bahnlängen-Puffereinrichtung variieren. Dies macht es zwingend erforderlich, dass die Bedienungsperson permanent verfügbar ist, um die Tuftingbahn bei Auftreten eines Fehlers im Reparaturbereich persönlich zu inspizieren, damit sie das Eintreten der Fehlerstelle in den Reparaturbereich erkennen und dann entsprechend die erforderlichen Maßnahmen zur manuellen Reparatur der Fehlerstelle einleiten kann.

Schließlich sei auch angemerkt, dass es Fehlerstellen gibt, die sich über mehrere Zentimeter oder Dezimeter entlang der Tuftingbahn erstrecken. Allerdings treten auch relativ kurze Fehlerstellen auf, die nur schwer von einer Bedienungsperson erkennbar sind, insbesondere dann, wenn die Tuftingbahn mit relativ hohen Geschwindigkeiten durch die Walzenanordnung läuft. Daher kann es bei unzureichender Inspektion der Tuftingbahn in dem Reparaturbereich durch die Bedienungsperson auch zu Qualitätseinbußen kommen.

Es ist Aufgabe der vorliegenden Erfindung, eine Vorrichtung und ein Verfahren zum Steuern einer Tuftinganlage sowie eine entsprechende Tuftinganlage bereitzustellen, bei der unter Verbesserung der Fertigungsqualität und unter Reduzierung des Personaleinsatzes eine zeitintensive Überwachung der laufenden Tuftingbahn im Reparaturbereich durch eine Bedienungsperson nicht mehr erforderlich ist.

Diese Aufgabe wird durch eine Vorrichtung nach Anspruch 1 gelöst, die eine Fehlererfassungseinrichtung, die die von der Tuftingmaschine ausgehende Tuftingbahn auf das Auftreten bestimmter Fehlertypen überwacht, und eine Steuereinrichtung aufweist, die mit der Fehlererfassungseinrichtung und mit der Walzenanordnung oder/und der Warenabzugeinrichtung gekoppelt ist, wobei die Steuereinrichtung die Tuftingbahn in Reaktion auf eine Erfassung einer Fehlerstelle durch die Fehlererfassungseinrichtung in einem vorbestimmten Stoppbereich der Walzenanordnung stoppt, wenn die erfasste Fehlerstelle einem Fehlertyp reparierbaren zuzuordnen ist und in den Stoppbereich eintritt.

Es sei darauf hingewiesen, dass es erforderlich ist, die Fehlererfassungseinrichtung unmittelbar an der Tuftingmaschine anzuordnen, um die von dieser ausgehende Tuftingbahn bei deren Austritt zu überwachen. Nur so ist gewährleistet, dass fertigungsbedingte Fehler sofort nach deren Entstehung erfasst werden können und dass die Tuftingmaschine bei dem Auftreten schwerer Fehler sofort automatisch oder von einer Bedienungsperson gestoppt werden kann, um die Herstellung einer großen Menge von Ausschussware zu verhindern. Allerdings muss die Tuftingmaschine beispielsweise dann nicht angehalten werden, wenn nur kleinere reparierbare Fehlerstellen erfasst wurden.

Erfindungsgemäß wird die Tuftingbahn automatisch in Reaktion auf eine Erfassung einer bestimmten Fehlerstelle in dem Stoppbereich, das heißt im Reparaturbereich, der Walzenanordnung angehalten, wenn die erfasste Fehlerstelle einem vorbestimmten Fehlertyp entspricht und in den Stoppbereich eingetreten ist. Demzufolge ist es erfindungsgemäß nicht mehr erforderlich, dass eine Bedienungsperson den Stoppbereich persönlich dauerhaft daraufhin inspiziert, ob die durch diesen laufende Tuftingbahn Fehlerstellen enthält. Es ist auch nicht mehr erforderlich, dass die Bedienungsperson so lange an dem Stoppbereich innerhalb der Walzenanordnung wartet, bis ein über die Fehlererfassungseinrichtung an der von der Tuftingmaschine ausgehenden Tuftingbahn erfasste Fehlerstelle im Reparaturbereich angelangt ist.

Durch die Erfindung lässt sich der Überwachungsaufwand durch eine Bedienungsperson erheblich reduzieren. Die Bedienungsperson muss sich nur noch im Falle eines Stoppens der Tuftingbahn im Stoppbereich (Reparaturbereich) zur Durchführung des Reparatureingriffs zu der Tuftinganlage begeben. Dadurch kann eine Bedienungsperson parallel mehrere Tuftinganlagen überwachen, was die Personalkosten reduziert. Zugleich wird auch die Qualität der erzeugten Tuftingbahn erhöht, da durch das selbsttätige Stoppen der Tuftingbahn bei Eintreten der Fehlerstelle in den Stoppbereich das Risiko minimiert wird, dass die Bedienungsperson kleinere Fehlerstellen auf der durch die Walzenanordnung und den Stoppbereich hindurchlaufenden Tuftingbahn übersieht.

Gemäß einer bevorzugten Ausführungsform der Erfindung ist vorgesehen, dass der Stoppbereich zur Durchführung eines Reparatureingriffs an der Tuftingbahn ausgebildet ist. Dies bedeutet, dass der Stoppbereich für eine Bedienungsperson entsprechend zugänglich gestaltet werden muss, um Reparatureingriffe durchführen zu können. Ferner kann erfindungsgemäß vorgesehen sein, dass der wenigstens eine vorbestimmte Fehlertyp ein nachträglich in der Tuftingbahn reparierbarer Fehler, insbesondere ein Fadenbruch, ist. So gibt es verschiedene Fehlertypen, von denen nur ein Teil als reparierbare Fehler einzustufen sind. Beispielsweise ist ein Anhalten der Tuftingbahn im Stoppbereich nicht erforderlich, wenn ein Fehlertyp auftritt, bei dem die Oberfläche der Tuftingbahn Unebenheiten besitzt, die beispielsweise auf stumpfe Messer zum Aufschneiden von Polmaterial-Schlingen zurückzuführen sind. Derartige Fehler werden auch als "Rupfer" bezeichnet, da statt eines sauberen Schnitts die Polmaterial-Fäden undefiniert ausreißen bzw. "rupfen". Derartige Fehler sind zwar erfassbar, sie müssen aber in der Regel nicht nachträglich repariert werden.

Vorzugsweise ist vorgesehen, dass die Fehlererfassungseinrichtung eine optische Erfassungseinrichtung, insbesondere eine Kamera oder eine Lichtschrankenanordnung, umfasst. Die Kamera oder Lichtschrankenanordnung kann mit einer Auswerteeinheit verbunden sein, die die verschiedenen von der Kamera oder Lichtschrankenanordnung erfassten Signale auswertet und daraus das Auftreten bestimmter Fehlertypen ermittelt.

Eine Weiterbildung der Erfindung sieht vor, dass die Walzenanordnung eine variable Bahnlängen-Puffereinrichtung, insbesondere eine Pendelwalzenanordnung mit wenigstens einer lagevariablen Pendelwalze, zum bedarfsweisen Zwischenspeichern eines Tuftingbahnabschnitts aufweist. Derartige Bahnlängen-Puffereinrichtungen können beispielsweise dazu eingesetzt werden, die Warenabzugeinrichtung zur Schonung ihres motorischen Antriebs nur periodisch zu betreiben. So kann die Puffereinrichtung ausgehend von einem leeren Zustand bei abgeschalteter Warenabzugeinrichtung aufgrund der in die Bahnlängen-Puffereinrichtung einlaufenden Tuftingbahn "gefüllt" werden, bis sie einen maximalen Füllstand erreicht. In der Folge muss die Bahnabzugeinrichtung wieder aktiviert werden, um die Bahnlängen-Puffereinrichtung zu leeren. Die Bahnlängen-Puffereinrichtung wird auch dazu genutzt, die Herstellung der Tuftingbahn während eines Reparatureingriffs im Stoppbereich nicht unterbrechen zu müssen. Die Speicherkapazität, das heißt die Länge des in der Bahnlängen-Puffereinrichtung zwischenspeicherbaren Tuftingbahnabschnitts, kann je nach Bedarf gewählt werden. Es ist auch möglich, mehrere Pendelwalzenanordnungen in Reihe zu schalten, um die Speicherkapazität der Bahnlängen-Puffereinrichtung zu erhöhen.

Gemäß einer Erfindungsvariante ist wenigstens eine Speicherzustand-Erfassungseinrichtung zum Bestimmen des aktuellen Speicherzustands der Bahnlängen-Puffereinrichtung vorgesehen. So ist es möglich, dass im Eintrittsbereich und im Austrittsbereich der Bahnlängen-Puffereinrichtung jeweils eine Längenmesseinrichtung zum Bestimmen der Länge der in die Bahnlängen-Puffereinrichtung eintretenden und aus der Bahnlängen-Puffereinrichtung austretenden Tuftingbahn angeordnet ist. In diesem Zusammenhang sieht eine Weiterbildung der Erfindung vor, dass die Steuereinrichtung das Eintreten der Fehlerstelle in den Stoppbereich anhand einer Abfrage der Längenmesseinrichtungen an der Bahnlängen-Puffereinrichtung erfasst. Die Steuereinrichtung kann also den Zeitpunkt des Eintretens der Fehlerstelle in den Stoppbereich mathematisch anhand der mittels der Längenmesseinrichtungen erfassten Bahnlängen ermitteln. Dabei ist die Länge des Tuftingbahnabschnitts zwischen der Tuftingmaschine und dem Eintritt in die Bahnlängen-Puffereinrichtung konstant. Auch die Länge des Tuftingbahnabschnitts zwischen dem Austritt aus der Bahnlängen-Puffereinrichtung und dem Beginn des Stoppbereichs ist konstant. Aus diesen bekannten Größen und dem ermittelten gegenwärtigen Speicherzustand der Bahnlängen-Puffereinrichtung lässt sich dann unter Berücksichtigung der Geschwindigkeit der Tuftingbahn, mit welcher diese durch die Walzenanordnung läuft, exakt der Zeitpunkt ermitteln, zu welchem die Tuftingbahn den Stoppbereich erreicht. Zu diesem Zeitpunkt kann dann die Tuftingbahn in dem Stoppbereich angehalten werden.

Alternativ hierzu ist es aber auch möglich, eine Stoppbereich-Erfassungseinrichtung vorzusehen, die mit der Steuereinrichtung gekoppelt ist, wobei die Steuereinrichtung die Tuftingbahn in Reaktion auf eine Erfassung einer Fehlerstelle in der Tuftingbahn durch die Stoppbereich-Erfassungseinrichtung in dem vorbestimmten Stoppbereich der Walzenanordnung stoppt, wenn die erfasste Fehlerstelle dem wenigstens einen Fehlertyp zuzuordnen ist und in den Stoppbereich eintritt. Statt einer Berechnung des Eintretens der Fehlerstelle in den Stoppbereich ist bei dieser Erfindungsvariante also eine unmittelbare Erfassung des Eintretens der Fehlerstelle in den Stoppbereich vorgesehen. Dadurch erhöht sich zwar der erforderliche gerätetechnische Aufwand, jedoch ist eine optische Verifizierung der erstmals mit der Erfassungs-Einrichtung nahe der Tuftingmaschine erfassten Fehlerstelle möglich. In diesem Zusammenhang kann ferner vorgesehen sein, dass die Stoppbereich-Erfassungseinrichtung eine optische Erfassungseinrichtung, insbesondere eine Kamera oder eine Lichtschrankenanordnung, umfasst.

Gemäß einer Weiterbildung dieser Erfindungsvariante kann im Anschluss an die Fehlererfassungseinrichtung eine Markiereinrichtung vorgesehen sein, die an der von der Fehlererfassungseinrichtung erfassten Fehlerstelle eine Markierung, insbesondere eine optisch erkennbare Markierung, vorzugsweise ein Loch oder eine Farbmarkierung, anbringt. Das Anbringen einer Markierung, insbesondere einer optisch erkennbaren Markierung beispielsweise am Rand der Tuftingbahn erleichtert das Auffinden kleinerer Fehlerstellen der im Stoppbereich angehaltenen Tuftingbahn zusätzlich. So kann vorgesehen sein, dass die Stoppbereich-Erfassungseinrichtung das Eintreten der Fehlerstelle in den Stoppbereich anhand der Markierung erfasst.

Wie vorstehend bereits angedeutet, ist es erfindungsgemäß möglich, dass die Steuereinrichtung zum Stoppen der Tuftingbahn beim Eintreten der Fehlerstelle in den vorbestimmten Stoppbereich die Warenabzugeinrichtung stoppt, wobei die Tuftingmaschine unter Füllung der Bahnlängen-Puffereinrichtung weiterläuft. Darüber hinaus sieht eine Weiterbildung der Erfindung vor, dass die Steuereinrichtung mit einer Eingabeeinheit versehen ist, die ein manuelles Löschen einer erfassten Fehlerstelle aus einem Speicher durch eine Bedienungsperson, insbesondere vor oder bei Erreichen des Stoppbereichs, zulässt.

Die Erfindung betrifft ferner eine Tuftinganlage, die mit einer Vorrichtung der vorstehend beschriebenen Art ausgerüstet ist.

Ferner betrifft die Erfindung ein Verfahren zum Steuern einer Tuftinganlage, insbesondere der vorstehend beschriebenen Art, nach Anspruch 16.

Die Erfindung wird im Folgenden anhand der beiliegenden Figuren beispielhaft erläutert. Es stellen dar:

Fig.1    eine schematische Darstellung eines ersten Ausführungsbeispiels der erfindungsgemäßen Tuftinganlage und

Fig.2    eine schematische Darstellung eines zweiten Ausführungsbeispiels der erfindungsgemäßen Tuftinganlage.

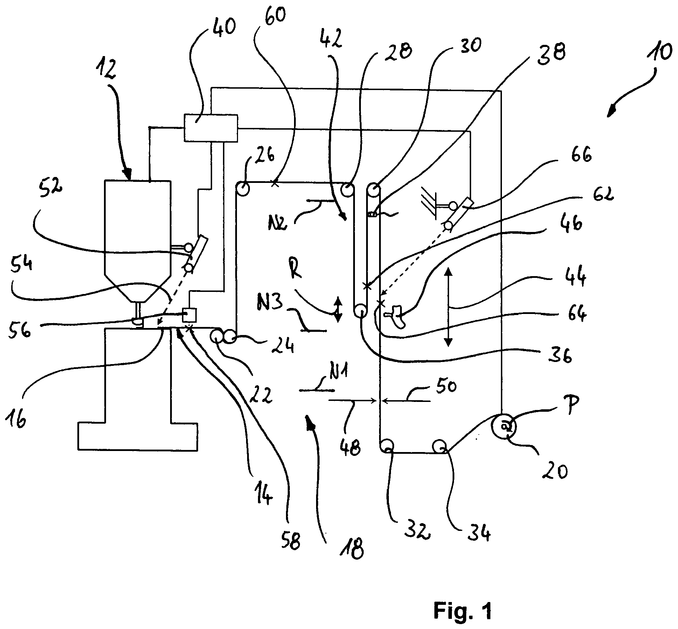

In Fig.1 ist eine erste Ausführungsform einer erfindungsgemäßen Tuftinganlage schematisch dargestellt und allgemein mit 10 bezeichnet. Diese umfasst eine Tuftingmaschine 12, mit der eine flächige Tuftingbahn 14 in an sich bekannter Weise hergestellt wird. Die Tuftingbahn 14 verlässt die Tuftingmaschine 12 in einem Auslassbereich 16. Die Tuftingbahn 14 wird sodann über eine Walzenanordnung 18 ausgehend von dem Auslassbereich 16 zu einer Warenabzugeinrichtung 20 geführt. Die Warenabzugeinrichtung 20 ist über einen nicht gezeigten Motor entsprechend Pfeil P drehangetrieben, so dass die Tuftingbahn 14 auf eine dort angebrachte Rolle aufgewickelt wird.

Die Walzenanordnung 18 umfasst eine Mehrzahl von Walzen 22, 24, 26, 28, 30, 32 und 34, über die die Tuftingbahn 14 herumgeführt ist. Ferner ist innerhalb der Walzenanordnung 18 eine Pendelwalze 36 angeordnet, um die die Tuftingbahn 14 in dem Bereich zwischen den beiden Walzen 28 und 30 in einer Schlaufe herumgeführt ist. Entsprechend Pfeil R kann die Pendelwalze 36 ihre Position zwischen einem Niveau N1 und einem Niveau N2 verändern. Auf dem Niveau N1 befindet sich die Pendelwalze an ihrem tiefsten Punkt, das heißt die Schlaufe der Tuftingbahn 14 um die Pendelwalze 36 ausgehend von den beiden Walzen 28 und 30 beschreibt ihren längsten Weg. In der Position N2 hingegen befindet sich die Pendelwalze 36 auf ihrem höchsten Niveau, das heißt die Schlaufe um die Pendelwalze 36 ausgehend von den beiden Walzen 28 und 30 beschreibt ihren kleinsten Weg.

Zur Erfassung, ob die Pendelwalze 36 das Niveau N2 erreicht hat, ist ein Sensor 38 vorgesehen. Der Sensor 38 ist mit einer Steuereinrichtung 40 in nicht dargestellter

Weise gekoppelt. Ferner kann auch ein vergleichbarer Sensor zur Erfassung des Erreichens des Niveaus N1 durch die Pendelwalze 36 vorgesehen sein.

Die Anordnung aus den Walzen 28, 30 und der Pendelwalze 36 bildet eine Bahnlängen-Puffereinrichtung 42, mit der sich je nach Schlaufenlänge ein bestimmter Längenabschnitt der von der Tuftingmaschine 12 ausgehenden Tuftingbahn 14 zwischenspeichern lässt. So ist es möglich, die Warenabzugeinrichtung 20 nur periodisch zu aktivieren, beispielsweise um deren motorischen Antrieb zu schonen. In Passivphasen der Warenabzugeinrichtung 20 kann dann beispielsweise die Pendelwalze von dem Niveau N2 ("leerer Speicher") durch Auffüllen der Bahnlängen-Puffereinrichtung 42 und Vergrößerung der Schlaufe in Richtung auf das Niveau N1 und schließlich bis auf dieses Niveau N1 ("voller Speicher") abgesenkt werden. Spätestens bei Erreichen des Niveaus N1 wird jedoch die Warenabzugeinrichtung 20 wieder aktiviert, um die Bahnlängen-Puffereinrichtung 42 wieder zu entleeren.

An die Bahnlängen-Puffereinrichtung 42 schließt sich ein Reparaturbereich 44 an. In diesem Reparaturbereich 44 können nachträglich an der bereits hergestellten Tuftingbahn 14 noch einzelne reparable Fehlerstellen, beispielsweise lokale Fadenbruchfehlerstellen, durch manuelle oder maschinelle Eingriffe repariert werden. Beispielsweise kann eine solche Fehlerstelle mit einem Handtuftgerät 46 von einer nicht dargestellten Bedienungsperson behoben werden. Hierzu ist anzumerken, dass die Tuftingbahn 14 derart zwischen den Walzen 30 und 32 geführt ist, dass ihre Florseite 48 in Fig.1 nach links weist und dass ihre Noppenseite 50 in Fig.1 nach rechts weist.

Zur Überwachung der Tuftingbahn 14 ist an der Tuftingmaschine 12 eine Kamera 52 vorgesehen. Diese überwacht gemäß strichliniertem Pfeil 54 den Auslassbereich 16 der Tuftingmaschine 12. Genauer gesagt überwacht die Kamera 52 die Tuftingbahn 14 im Auslassbereich 16 daraufhin, ob bestimmte Fehlertypen auftreten. Bei schwerwiegenden irreparablen Fehlern wird der Tuftingfertigungsprozess innerhalb der Tuftingmaschine 12 unmittelbar angehalten. Die Kamera 52 ist mit der Steuereinrichtung 40 verbunden, welche die von der Kamera ausgegebenen Signale entsprechend auswertet und ggf. die Tuftingmaschine 12 anhält. Die Kombination aus Kamera 52 und Steuereinrichtung 40 ist aber auch dazu in der Lage, reparable Fehlerstellen in der Tuftingbahn 14 zu erfassen. Derartige Fehlerstellen erfordern kein Abschalten der Tuftingmaschine 12 sondern können unter Fortsetzung des Tuftingfertigungsprozesses manuell mit dem Handtuftgerät 46 im Reparaturbereich 44 behoben werden.

Um derartige mit der Kamera 52 erfasste reparable Fehlerstellen auf der Tuftingbahn 14 zu markieren, umfasst die Ausführungsform gemäß Fig.1 eine Markiereinrichtung 56, die nach Erfassen einer Fehlerstelle eine Markierung 58, 60, 62, 64 an den Rand der Tuftingbahn 14 auf deren Noppenseite setzt. Dabei handelt es sich beispielsweise um eine Farbmarkierung. Man erkennt in Fig.1 an der Tuftingbahn mehrere Farbmarkierungen, nämlich die Farbmarkierung 58, sowie die weiteren Farbmarkierungen 60, 62 und 64, die allesamt von der Markiereinrichtung 56 an der Tuftingbahn in Reaktion darauf angebracht wurden, dass die Kamera 52 zusammen mit der Steuereinrichtung 40 einen reparablen Fehler in der Tuftingbahn 14 entdeckt hat. Dabei sei angemerkt, dass die Kamera 52 die gesamte Breite der Tuftingbahn überwachen muss.

Fig.1 zeigt ferner eine weitere Kamera 66, die ebenfalls mit der Steuereinrichtung 40 gekoppelt ist. Diese Kamera 66 überwacht lediglich den Rand des augenblicklich durch den Reparaturbereich 44 laufenden Tuftingbahnabschnitts. Dabei handelt es sich um den Randbereich, an dem die Markiereinrichtung 56 jeweils Farbmarkierungen im Falle auftretender Fehlerstellen anbringt.

Sobald die Kamera 66 zusammen mit der Steuereinrichtung 40 eine derartige Fehlerstelle erfasst, in Fig.1 beispielsweise die Fehlerstelle 64, steuert die Steuereinrichtung 40 die Warenabzugeinrichtung 20 an, um den Warenabzug zu unterbrechen. Dies bedeutet, dass die Tuftingbahn 14 im Reparaturbereich 44 angehalten wird und vorübergehend lagestabil bleibt. Der Tuftingfertigungsprozess über die Tuftingmaschine 12 wird dabei jedoch nicht unterbrochen. Die von der Tuftingmaschine 12 permanent ausgehende Tuftingbahn 14 wird unter Nutzung der Bahnlängen-Puffereinrichtung 42 abschnittsweise zwischengespeichert. Der Fehler 64 kann sodann von einer Bedienungsperson mittels des Handtuftgeräts 46 behoben werden.

Nach Beheben des Fehlers gibt die Bedienungsperson über eine nicht gezeigte Eingabeeinrichtung ein Signal an die Steuereinrichtung 40, dass der Fehler entsprechend behoben wurde. Sodann steuert die Steuereinrichtung 40 die Warenabzugeinrichtung 20 wieder an und aktiviert diese, um die Tuftingbahn wieder in Bewegung zu setzen. Dies erfolgt solange, bis die nächste Fehlerstelle, z.B. die Fehlerstelle 62 von der Kamera 66 erfasst wird. Sodann wird wiederum die Tuftingbahn 14 im Reparaturbereich 44 angehalten, um einen Reparatureingriff mittels des Handtuftgeräts 46 zu ermöglichen.

Mit der Erfindung ist es also möglich, die Tuftingbahn 14 im Reparaturbereich 44 gezielt anzuhalten, wenn in diesem Reparaturbereich 44 tatsächlich auch eine reparable Fehlerstelle vorliegt. Diese Fehlerstelle kann dann gezielt von einer Bedienungsperson oder maschinell behoben werden. Es ist nicht mehr erforderlich, dass eine Bedienungsperson permanent den Reparaturbereich 44 persönlich inspiziert und darauf wartet, bis ein über die Kamera 52 bereits erfasster Fehler darin auftaucht, daraufhin die Tuftingbahn 14 gezielt durch Deaktivieren der Warenabzugeinrichtung 20 anhält, um den Fehler reparieren zu können, und sodann die Anlage 10 wieder in Bewegung setzt.

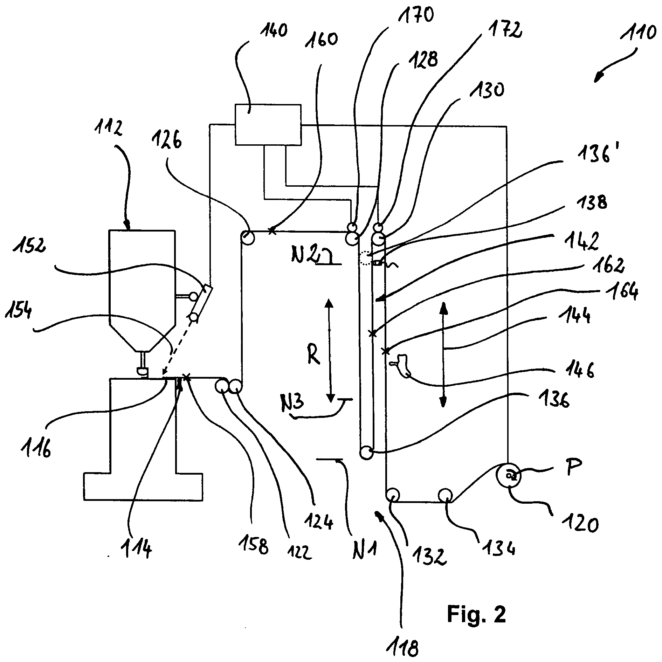

Fig.2 zeigt eine zweite Ausführungsform der Erfindung. Zur Vermeidung von Wiederholungen werden für gleichartige oder gleichwirkende Komponenten dieselben Bezugszeichen verwendet, wie bei der Ausführungsform gemäß Fig.1, jedoch mit der Ziffer "1" vorangestellt.

Das Ausführungsbeispiel gemäß Fig.2 unterscheidet sich vom Ausführungsbeispiel gemäß Fig.1 darin, dass keine gesonderte Markierung über eine Markiereinrichtung 56 bei Erfassung einer Fehlerstelle im Auslassbereich 116 der Tuftingmaschine 112 angebracht wird. Ferner unterscheidet sich die Ausführungsform gemäß Fig.2 von der Ausführungsform gemäß Fig.1 darin, dass auch im Reparaturbereich 144 keine optische Erfassung von Markierungen an Fehlerstellen erfolgt.

Die Ausführungsform gemäß Fig.2 weist stattdessen Einrichtungen 170 und 172 zur Lauflängenmessung der Tuftingbahn 114 auf. Mit den Lauflängenmesseinrichtungen 170 und 172 ist es möglich, den gegenwärtigen Füllzustand der Bahnlängen-Puffereinrichtung 142 zu erfassen. Dies erfolgt dadurch, dass ausgehend von einem Startzustand die Lauflänge des in die Bahnlängen-Puffereinrichtung einlaufenden Tuftingbahnabschnitts mit der Einrichtung 170 erfasst wird. Gleichermaßen wird die Länge des aus der Bahnlängen-Puffereinrichtung 142 auslaufenden Tuftingbahnabschnitts mit der Einrichtung 172 erfasst. Bei den Einrichtungen 170 und 172 kann es sich beispielsweise um Tasträder mit Drehgebern handeln, wobei die Tasträder auf der durchlaufenden Tuftingbahn abrollen.

Darüber hinaus sind die konstruktionsbedingt konstant bleibenden Längen der Tuftingbahnabschnitte zwischen dem Auslassbereich 116 und der Walze 122, zwischen der Walze 124 und der Walze 126, zwischen der Walze 126 und der Walze 128 sowie zwischen der Walze 130 und dem Reparaturbereich 144 bekannt. Lediglich die Länge des Tuftingbahnabschnitts der Schlaufe um die Pendelwalze 136 variiert in Abhängigkeit von dem Füllzustand der Bahnlängen-Puffereinrichtung 142. Wie vorstehend dargelegt, lässt sich diese Länge aber anhand der Abtastwerte der Einrichtungen 170 und 172 erfassen, so dass der gegenwärtige Füllzustand der Bahnlängen-Puffereinrichtung 142 ermittelbar ist. Anhand der bekannten und über die Einrichtungen 170 und 172 erfassbaren Längen der Tuftingbahnabschnitte lässt sich unter Berücksichtigung der Laufgeschwindigkeit der Tuftingbahn 114 durch die Walzenanordnung 118 genau vorhersagen, wann eine Fehlerstelle, beispielsweise die Fehlerstelle 164, in den Reparaturbereich 144 eindringt. Dies geschieht anhand der folgenden Formeln:

<div align="center">Es gelten folgende Variablendefinitionen:</div>

| Variable | Beschreibung |
|---|---|
| L1(t), L2(t) | Zeitlich veränderlicher Wert der Wegaufnehmer 170 und 172; <br> L2 inkrementiert während einer Produktionscharge ohne Rücksetzen; <br> Wenn die Bahnlängen-Puffereinrichtung 142 leer ist (Niveau der Pendelwalze 136 auf N2, siehe strichliniert dargestellte Walze 136') wird L1=L2 gesetzt; andernfalls inkrementiert L1 ebenfalls; |
| Lleer | Konstante Wegstrecke zwischen der Überwachungsposition im Austrittsbereich 116 und dem Beginn des Reparaturbereichs 144 bei leerer Bahnlängen-Puffereinrichtung 142 |
| Ls(t) | Länge des Tuftingbahnabschnitts in der Bahnlängen-Puffereinrichtung 142 zum Zeitpunkt t |
| Ti | Zeitpunkt, zum dem die i-te Fehlerstelle an der Überwachungsposition im Austrittsbereich 116 auftritt |
| L1ui = L1(Ti) | Wert des Wegaufnehmers 172 zum Zeitpunkt Ti dieser Wert wird in einem Fifo-Speicher festgehalten |
| Lges(t) | Zeitlich veränderliche Wegstecke zwischen Überwachungsposition im Austrittsbereich 116 und Beginn des Reparaturbereichs 144 einschließlich Länge des Tuftingbahnabschnitts in der Bahnlängen-Puffereinrichtung 142 zum Zeitpunkt t |

Ausgehend von diesen Variablendefinitionen gilt folgendes:
Lges(t) setzt sich aus der konstanten Stecke Lleer und der Länge des Tuftingbahnabschnitts in der Bahnlängen-Puffereinrichtung 142 zum Zeitpunkt t zusammen:

$$(1) \qquad Lges(t) = Lleer + Ls(t)$$

Die Länge des Tuftingbahnabschnitts in der Bahnlängen-Puffereinrichtung 142 zum Zeitpunkt t läßt sich aus L1 und L2 ermitteln:

$$(2) \qquad Ls(t) = L1(t) - L2(t)$$

Die Fehlerstelle i hat dann den Reparaturbereich 144 erreicht, wenn die Tuftingbahn 114 seit dem Erkennen der Fehlerstelle i an der Überwachungsposition im Austrittsbereich 116 um die aktuelle Länge Lges(t) weiter gelaufen ist:

$$(3) \quad L1(t) = L1ui + Lges(t)$$

Setzt man die Werte aus den Gleichungen (1) und (2) ein, erhält man die Stoppbedingung für die Warenabzugeinrichtung:

$$(4)\, L1(t) = L1ui + Lleer + L1(t) - L2(t)$$

oder

$$(5)\, \underline{L2(t) = L1ui + Lleer}$$

Gemäß vorstehendem Berechnungsverfahren lässt sich auch mit der zweiten Ausführungsform der Erfindung gemäß Fig.2 genau ermitteln, wann eine Fehlerstelle, beispielsweise die Fehlerstelle 164, die vorangehend mit der Kamera 152 und der Steuereinrichtung 140 erfasst wurde, in den Reparaturbereich 144 eindringt. In der Folge steuert die Steuereinrichtung 140 die Warenabzugeinrichtung 120 derart an, dass diese ausgeschaltet wird, so dass die Tuftingbahn 114 im Reparaturbereich 144 angehalten wird und eine manuelle oder automatische Reparatur der Fehlerssstelle 164, beispielsweise mit dem Handtuftgerät 146, durchgeführt werden kann. Danach kann die Warenabzugeinrichtung 120 wieder aktiviert werden.

Auch mit der Ausführungsform gemäß Fig.2 ist es daher möglich, eine mit der Kamera 152 erfasste Fehlerstelle 158, 160, 162 und 164 auf deren Reparaturmöglichkeit zu überprüfen, und dann, wenn es sich um eine reparable Fehlerstelle handelt, die Tuftinganlage 110 ungeachtet des Auftretens der Fehlerstelle weiterlaufen zu lassen. Sobald die Fehlerstelle dann in den Reparaturbereich 144 gelangt, kann unter Ausnutzung der Bahnlängen-Puffereinrichtung 142 ohne Unterbrechung des Tuftingbahn-Fertigungsprozesses eine manuelle oder maschinelle Reparatur der Fehlerstelle durchgeführt werden. Auch bei dieser Ausführungsform ist es nicht mehr erforderlich, dass eine Bedienungsperson permanent den Reparaturbereich 144 daraufhin überwacht, ob eine Fehlerstelle in diesen eintritt. Es ist auch möglich, die Fertigungsqualität zu erhöhen, da die Tuftingbahn im Reparaturbereich 144 in jedem Fall angehalten wird, sobald eine erfasste Fehlerstelle in diesen eintritt.

An den vorstehend beschriebenen Ausführungsbeispielen können im Rahmen der Erfindung auch einige Abwandlungen oder Ergänzungen vorgenommen werden. So ist es möglich, in einem Fall, in dem eine Fehlerstelle im Reparaturbereich angelangt ist und die Tuftingbahn im Reparaturbereich unter Deaktivierung der Warenabzugeinrichtung 120 angehalten wird, weiterhin den Füllzustand der Bahnlängen-Puffereinichtung 142 zu überwachen. Erreicht diese ihren maximalen Füllzustand, das heißt die Pendelwalze befindet sich auf dem Niveau N1, so dass kein weiteres Nachlaufen der Tuftingbahn 114 in die Bahnlängen-Puffereinrichtung 142 möglich ist, so ist die Tuftingmaschine 112 in einem derartigen Zustand ganz auszuschalten. Alternativ kann aber auch in einem solchen Zustand automatisch die Warenabzugeinrichtung 120 wieder aktiviert werden, wobei in Kauf genommen wird, dass die Fehlerstelle 164 unrepariert bleibt.

Die Speicherkapazität der Bahnlängen-Puffereinichtung 42 bzw. 142 ist beispielsweise so ausgelegt, dass ein Tuftingbahnabschnitt mit einer Länge von 5 bis 30 m zwischengespeichert werden kann. Bei einer üblichen Vorschubgeschwindigkeit der Tuftingbahn 14 bzw. 114 von 3 m/min schafft dies der Bedienungsperson einen Zeitraum von bis zu 10 Minuten um zu dem jeweiligen Reparaturbereich 44 bzw. 144 zu gelangen und den Reparatureingriff vorzunehmen.

**Patentansprüche**

1. Vorrichtung zum Steuern einer Tuftinganlage (10, 110), wobei die Tuftinganlage (10, 110) eine Tuftingmaschine (12, 112) zum Herstellen einer flächigen Tuftingbahn (14, 114), eine Walzenanordnung (18, 118) zum Führen der Tuftingbahn (14, 114) und eine Warenabzugeinrichtung (20, 120) zum Aufwickeln der von der Walzenanordnung (18, 118) geführten Tuftingbahn (14, 114) aufweist, wobei die Vorrichtung aufweist:

   - eine Fehlererfassungseinrichtung (52, 152) vor der Walzenanordnung (18, 118), die die von der Tuftingmaschine (12, 112) ausgehende Tuftingbahn (14, 114) auf das Auftreten vorbestimmter Fehlertypen überwacht, und
- eine Steuereinrichtung (40, 140) die mit der Fehlererfassungseinrichtung (52, 152) und mit der Walzenanordnung (18, 118) und der Warenabzugeinrichtung (20, 120) gekoppelt ist,

wobei die Steuereinrichtung (40, 140) die Tuftingbahn (14, 114) in Reaktion auf eine Erfassung einer Fehlerstelle durch die Fehlererfassungseinrichtung (52, 152) in einem vorbestimmten Stoppbereich (44, 144) der Walzenanordnung (18, 118) stoppt, wenn die erfasste Fehlerstelle dem als reparierbarer Fehler eingestuften, d. h. vorbestimmten Fehlertyp zuzuordnen ist und in den Stoppbereich (44, 144) eintritt,
und die Tuftingmaschine (12, 112) sofort stoppbar ist, wenn die erfasste Fehlerstelle dem als schwerer Fehler vorbestimmten Fehlertyp zuzuordnen ist,
wobei die Fehlererfassungseinrichtung (52, 152) die Tuftingbahn (14, 114) beim oder nahe dem Verlassen der Tuftingmaschine (12, 112) überwacht,
wobei die Walzenanordnung (18, 118) eine variable Bahnlängen-Puffereinrichtung (42, 142) zum bedarfsweisen Zwischenspeichern eines Tuftingbahnabschnitts aufweist, an die sich der Stoppbereich (44, 144) anschließt und
wobei die Steuereinrichtung (40, 140) zum Stoppen der Tuftingbahn (14,114) beim Eintreten der Fehlerstelle in den vorbestimmten Stoppbereich (44, 144) die Warenabzugeinrichtung (20, 120) stoppt, wobei die Tuftingmaschine (12, 112) unter Füllung der Bahnlängen-Puffereinrichtung (42, 142) weiterläuft.

2. Vorrichtung nach Anspruch 1,
**dadurch gekennzeichnet, dass** der Stoppbereich (44, 144) zur Durchführung eines Reparatureingriffs an der Tuftingbahn (14, 114) ausgebildet ist.

3. Vorrichtung nach Anspruch 1 oder 2,
**dadurch gekennzeichnet, dass** einer der als nachträglich in der Tuftingbahn (14, 114) reparierbarer Fehler vorbestimmte Fehlertyp ein Fadenbruch ist.

4. Vorrichtung nach einem der vorangehenden Ansprüche,
**dadurch gekennzeichnet, dass** die Fehlererfassungseinrichtung eine optische Erfassungseinrichtung (52, 152), insbesondere eine Kamera oder eine Lichtschrankenanordnung, umfasst.

5. Vorrichtung nach einem der vorangehenden Ansprüche,
**dadurch gekennzeichnet, dass** die variable Bahnlängen-Puffereinrichtung (42, 142) eine Pendelwalzenanordnung mit wenigstens einer lagevariablen Pendelwalze (36, 136) ist.

6. Vorrichtung nach Anspruch 5,
**dadurch gekennzeichnet, dass** die Bahnlängen-Puffereinrichtung (42, 142) zwischen einem minimalen Speicherzustand und einem maximalen Speicherzustands variierbar füllbar und entleerbar ist.

7. Vorrichtung nach Anspruch 5 oder 6,
**gekennzeichnet durch** wenigstens eine Speicherzustand-Erfassungseinrichtung (38, 138, 170, 172) zum Bestimmen des aktuellen Speicherzustands der Bahnlängen-Puffereinrichtung.

8. Vorrichtung nach Anspruch 7,
**dadurch gekennzeichnet, dass** im Eintrittsbereich und im Austrittsbereich der Bahnlängen-Puffereinrichtung jeweils ein Längenmesseinrichtung (170, 172) zum Bestimmen der Länge der in die Bahnlängen-Puffereinrichtung (142) eintretenden und aus der Bahnlängen-Puffereinrichtung (142) austretenden Tuftingbahnlänge angeordnet ist.

9. Vorrichtung nach einem der vorangehenden Ansprüche,
**gekennzeichnet durch** eine Stoppbereich-Erfassungseinrichtung (66), die mit der Steuereinrichtung (40) gekoppelt ist, wobei die Steuereinrichtung (40) die Tuftingbahn (14) in Reaktion auf eine Erfassung einer Fehlerstelle in der Tuftingbahn (14) durch die Stoppbereich-Erfassungseinrichtung (66) in dem vorbestimmten Stoppbereich (44) der Walzenanordnung (18) stoppt, wenn die erfasste Fehlerstelle dem als reparierbarer Fehler vorbestimmten Fehlertyp zuzuordnen ist und in den Stoppbereich (44) eintritt.

10. Vorrichtung nach Anspruch 9,
**dadurch gekennzeichnet, dass** die Stoppbereich-Erfassungseinrichtung eine optische Erfassungseinrichtung (66), insbesondere eine Kamera oder eine Lichtschrankenanordnung, umfasst.

**11.** Vorrichtung nach einem der vorangehenden Ansprüche,
**dadurch gekennzeichnet, dass** im Anschluss an die Fehlererfassungseinrichtung (52) eine Markiereinrichtung (56) vorgesehen ist, die an der von der Fehlererfassungseinrichtung erfassten Fehlerstelle eine Markierung (58), insbesondere eine optisch erkennbare Markierung, vorzugsweise ein Loch oder eine Farbmarkierung, anbringt.

**12.** Vorrichtung nach Anspruch 11,
**dadurch gekennzeichnet, dass** die Stoppbereich-Erfassungseinrichtung (66) das Eintreten der Fehlerstelle in den Stoppbereich (44) anhand der Markierung erfasst.

**13.** Vorrichtung nach Anspruch 8 und einem der vorangehenden Ansprüche,
**dadurch gekennzeichnet, dass** die Steuereinrichtung (140) das Eintreten der Fehlerstelle in den Stoppbereich (144) anhand einer Abfrage der Längenmesseinrichtungen (170, 172) an der Bahnlängen-Puffereinrichtung (142) erfasst.

**14.** Vorrichtung nach einem der vorangehenden Ansprüche,
**dadurch gekennzeichnet, dass** die Steuereinrichtung (40, 140) mit einer Eingabeeinheit versehen ist, die ein manuelles Löschen einer erfassten Fehlerstelle aus einem Speicher durch eine Bedienungsperson, insbesondere vor oder bei Erreichen des Stoppbereichs (44, 144), zulässt.

**15.** Tuftinganlage (110) mit einer Vorrichtung nach einem der vorangehenden Ansprüche.

**16.** Verfahren zum Steuern einer Tuftinganlage, insbesondere nach einem der vorangehenden Ansprüche, wobei die Tuftinganlage eine Tuftingmaschine zum Herstellen einer flächigen Tuftingbahn, eine Walzenanordnung zum Führen der Tuftingbahn, wobei die Walzenanordnung (18, 118) eine variable Bahnlängen-Puffereinrichtung (42, 142) zum bedarfsweisen Zwischenspeichern eines Tuftingbahnabschnitts aufweist, an die sich ein Stoppbereich (44, 144) anschließt und eine Warenabzugeinrichtung zum Aufwickeln der von der Walzenanordnung geführten Tuftingbahn aufweist, mit den Schritten:

- Überwachen der von der Tuftingmaschine ausgehenden Tuftingbahn auf das Auftreten vorbestimmter Fehlertypen mit einer Fehlererfassungseinrichtung (52, 152) beim oder nahe dem Verlassen der Tuftingmaschine (12, 112) vor der Walzenanordnung (18, 118) und
- Stoppen der Tuftingbahn in Reaktion auf eine Erfassung einer Fehlerstelle durch die Fehlererfassungseinrichtung (52, 152) in dem vorbestimmten Stoppbereich der Walzenanordnung, wenn die erfasste Fehlerstelle dem als reparierbarer Fehler vorbestimmten Fehlertyp zuzuordnen ist und in den Stoppbereich eintritt, und
- sofortiges Stoppen der Tuftingmaschine (12, 112), wenn die erfasste Fehlerstelle dem als schwerer Fehler vorbestimmten Fehlertyp zuzuordnen ist,

wobei eine Steuereinrichtung (40, 140) zum Stoppen der Tuftingbahn (14,114) beim Eintreten der Fehlerstelle in den vorbestimmten Stoppbereich (44, 144) die Warenabzugeinrichtung (20, 120) stoppt, wobei die Tuftingmaschine (12, 112) unter Füllung der Bahnlängen-Puffereinrichtung (42, 142) weiterläuft.

**Claims**

**1.** Device for controlling a tufting installation (10, 110), the tufting installation (10, 110) comprising a tufting machine (12, 112) for producing a flat tufting web (14, 114), a roller arrangement (18, 118) for guiding the tufting web (14, 114) and a take-off device (20, 120) for winding up the tufting web (14, 114) guided by the roller arrangement (18, 118), wherein the device comprises:

- a fault detection device (52, 152) in front of the roller arrangement (18, 118) which monitors the tufting web (14, 114) coming from the tufting machine (12, 112) for the occurrence of predefined types of faults, and
- a control device (40, 140) which is coupled to the fault detection device (52, 152) and to the roller arrangement (18, 118) and the take-off device (20, 120),

wherein the control device (40, 140) stops the tufting web (14, 114) in response to the detection of a fault location by the fault detection device (52, 152) in a predefined stopping area (44, 144) of the roller arrangement (18, 118), when the detected fault location is determined to be a reparable fault, i.e. is a predefined type of fault, and enters the stopping area (44, 144),

and the tufting machine (12, 112) can be stopped immediately if the detected fault location is considered to be a serious fault of the predefined types of fault,

wherein the fault detection device (52, 152) monitors the tufting web (14, 114) at or near an exit of the tufting machine (12, 112),

wherein the roller arrangement (18, 118) comprises a variable web length buffering device (42, 142) for temporarily storing if necessary a section of the tufting web, which is adjacent to the stopping area (44, 144) and

wherein the control device (40, 140) for stopping the tufting web (14, 114) stops the take-off device (20, 120) when the fault enters the predefined stop area (44, 144), wherein the tufting machine (12, 112) continues to run while filling the web length buffering device (42, 142).

2. Device according to claim 1,
**characterised in that** the stopping area (44, 144) is designed for performing a repair on the tufting web (14, 144).

3. Device according to claim 1 or claim 2,
**characterised in that** a break in the thread is one type of fault which is defined as a fault that can be repaired subsequently in the tufting web (14, 114).

4. Device according to any of the preceding claims,
**characterised in that** the fault detection device comprises an optical detection device (52, 152), in particular a camera or a light barrier arrangement.

5. Device according to any of the preceding claims,
**characterised in that** the variable web length buffering device (42, 142) is a jockey roller arrangement with at least one jockey roller (36, 136) which can be varied in position.

6. Device according to claim 5,
**characterised in that** the web length buffering device (42, 142) can be variably filled and emptied between a minimum storage status and a maximum storage status.

7. Device according to claim 5 or claim 6,
**characterised by** at least one storage status detection device (38, 138, 170, 172) for determining the current storage status of the web length buffering device.

8. Device according to claim 7,
**characterised in that** in the inlet area and in the outlet area of the web length buffering device respectively a length measuring device (170, 172) is arranged for determining the length of the tufting web length entering the web length buffering device (142) and exiting the web length buffering device (142).

9. Device according to any of the preceding claims,
**characterised by** a stopping area detection device (66), which is coupled to the control device (40), wherein the control device (40) stops the tufting web (14) in response to the detection of a fault in the tufting web (14) by means of the stopping area detection device (66) in the predefined stopping area (44) of the roller arrangement (18), if the detected fault is the type of fault that can be repaired, and enters the stopping area (44).

10. Device according to claim 9,
**characterised in that** the stopping area detection device comprises an optical detection device (66), in particular a camera or a light barrier arrangement.

11. Device according to any of the preceding claims,
**characterised in that** a marking device (56) adjoining the fault detection device (52) is provided which applies a marking (58) to the fault location detected by the fault detection device, in particular a visually recognisable marking, preferably a hole or a colour marking.

12. Device according to claim 11,
**characterised in that** the stopping area detection device (66) detects the entry of the fault location into the stopping area (44) by means of the marking.

13. Device according to claim 8 and any of the preceding claims,

**characterised in that** the control device (140) detects the entry of the fault into the stopping area (144) from a query of the length measuring devices (170 , 172) on the web length buffering device (142).

14. Device according to any of the preceding claims,
**characterised in that** the control device (40, 140) is provided with an input unit which allows the manual removal by an operator of a detected fault location from a memory, in particular before or on reaching the stopping area (44, 144).

15. Tufting installation (110) comprising a device according to any of the preceding claims.

16. Method for controlling a tufting installation, in particular according to any of the preceding claims, wherein the tufting installation comprises a tufting machine for producing a flat tufting web, a roller arrangement for guiding the tufting web, wherein the roller arrangement (18, 118) comprises a variable web length buffering device (42, 142) for temporarily storing a section of tufting web if necessary, which is preceded by a stopping area (44, 144) and comprises a take-off device for winding up the tufting web guided by the roller arrangement,
comprising the steps:

- monitoring the tufting web coming from the tufting machine for the occurrence of predefined types of faults by means of a fault detection device (52, 152) when leaving or close to leaving the tufting machine (12, 112) before the roller arrangement (18, 118) and
- stopping the tufting web in response to the detection of a fault location by the fault detection device (52, 152) in the predefined stopping area of the roller arrangement, if the detected fault location is defined as a reparable fault of the predefined fault types, and enters the stopping area and
- immediately stopping the tufting machine (12, 112) when the detected fault location is defined as a serious fault of the predefined fault types,

wherein a control device (40, 140) for stopping the tufting web (14, 114) when the fault location enters the predefined stopping area (44, 144) stops the take-off device (20, 120), wherein the tufting machine (12, 112) continues to run while filling the web length buffering device (42, 142).

## Revendications

1. Dispositif de commande d'une installation de tuftage (10, 110), dans lequel l'installation de tuftage (10, 110) présente une machine de tuftage (12, 112) pour fabriquer une bande de tuftage plate (14, 114), un agencement de rouleaux (18, 118) pour guider la bande de tuftage (14, 114) et un dispositif d'extraction de produit (20, 120) pour enrouler la bande de tuftage (14, 114) guidée par l'agencement de rouleaux (18, 118),
dans lequel le dispositif présente :

- un dispositif de détection de défauts (52, 152) devant l'agencement de rouleaux (18, 118), qui surveille l'apparition de types de défauts prédéterminés sur la bande de tuftage (14, 114) sortant de la machine de tuftage (12, 112), et
- un dispositif de commande (40, 140) qui est couplé au dispositif de détection de défauts (52, 152) et à l'agencement de rouleaux (18, 118) ainsi qu'au dispositif d'extraction de produit (20, 120),

dans lequel le dispositif de commande (40, 140) arrête la bande de tuftage (14, 114) en réaction à une détection d'un point de défaut par le dispositif de détection de défauts (52, 152) dans une zone d'arrêt prédéterminée (44, 144) de l'agencement de rouleaux (18, 118) si le point de défaut détecté est à imputer à un type de défaut classé comme défaut réparable, c'est-à-dire prédéterminé, et pénètre dans la zone d'arrêt (44, 144),
et la machine de tuftage (12, 112) peut être arrêtée immédiatement si le point de défaut détecté est à imputer à un type de défaut déterminé comme défaut lourd,
dans lequel le dispositif de détection de défauts (52, 152) contrôle la bande de tuftage (14, 114) au moment ou presque au moment de quitter la machine de tuftage (12, 112),
dans lequel l'agencement de rouleaux (18, 118) présente un dispositif tampon de longueur de bande variable (42, 142) pour effectuer en cas de besoin une stockage intermédiaire d'une section de bande de tuftage, auquel se raccorde la zone d'arrêt (44, 144) et
dans lequel le dispositif de commande (40, 140) arrête le dispositif d'extraction de produit (20, 120) pour arrêter la bande de tuftage (14, 114) lors de l'entrée du point de défaut dans la zone d'arrêt prédéterminée (44, 144), dans lequel la machine de tuftage (12, 112) continue à opérer en remplissant le dispositif tampon de longueur de bande (42, 142).

2. Dispositif selon la revendication 1, **caractérisé en ce que** la zone d'arrêt (44, 144) est formée pour réaliser une intervention de réparation sur la bande de tuftage (14, 114).

3. Dispositif selon la revendication 1 ou 2,
**caractérisé en ce qu'**un type de défaut prédéterminé comme défaut réparable ultérieurement dans la bande de tuftage (14, 114) est une rupture de fil.

4. Dispositif selon l'une quelconque des revendications précédentes,
**caractérisé en ce que** le dispositif de détection de défauts comprend un dispositif de détection optique (52, 152), en particulier une caméra ou un agencement de barrière lumineuse.

5. Dispositif selon l'une quelconque des revendications précédentes,
**caractérisé en ce que** le dispositif tampon de longueur de bande variable (42, 142) est un agencement de rouleaux compensateur avec au moins un rouleau compensateur à position variable (36, 136).

6. Dispositif selon la revendication 5,
**caractérisé en ce que** le dispositif tampon de longueur de bande (42, 142) peut être rempli et vidé de manière variable entre un état de stockage minimal et un état de stockage maximal.

7. Dispositif selon la revendication 5 ou 6,
**caractérisé par** au moins un dispositif de détection d'état de stockage(38, 138, 170, 172) pour déterminer l'état de stockage courant du dispositif tampon de longueur de bande.

8. Dispositif selon la revendication 7,
**caractérisé en ce que** l'on agence dans la zone d'entrée et dans la zone de sortie du dispositif tampon de longueur de bande respectivement un dispositif de mesure de longueur (170, 172) pour déterminer la longueur de la bande de tuftage entrant dans le dispositif tampon de longueur de bande (142) et la longueur de la bande de tuftage sortant du dispositif tampon de longueur de bande (142).

9. Dispositif selon l'une quelconque des revendications précédentes,
**caractérisé par** un dispositif de détection de zone d'arrêt (66), qui est couplé au dispositif de commande (40), dans lequel le dispositif de commande (40) arrête la bande de tuftage (14) en réaction à une détection d'un point de défaut dans la bande de tuftage (14) par le dispositif de détection de zone d'arrêt (66) dans la zone d'arrêt prédéterminée (44) de l'agencement de rouleaux (18) si le point de défaut détecté est à imputer au type de défaut prédéterminé comme défaut réparable et pénètre dans la zone d'arrêt (44).

10. Dispositif selon la revendication 9,
**caractérisé en ce que** le dispositif de détection de zone d'arrêt comprend un dispositif de détection optique (66), en particulier une caméra ou un agencement de barrière lumineuse.

11. Dispositif selon l'une quelconque des revendications précédentes,
**caractérisé en ce qu'**il est prévu à la suite du dispositif de détection de défauts (52) un dispositif de marquage (56) qui applique sur le point de défaut détecté par le dispositif de détection de défauts un marquage (58), en particulier un marquage reconnaissable au plan optique, de préférence un trou ou un marquage de couleur.

12. Dispositif selon la revendication 11,
**caractérisé en ce que** le dispositif de détection de zone d'arrêt (66) détecte l'entrée du point de défaut dans la zone d'arrêt (44) sur la base du marquage.

13. Dispositif selon la revendication 8 et l'une quelconque des revendications précédentes,
**caractérisé en ce que** le dispositif de commande (140) détecte l'entrée du point de défaut dans la zone d'arrêt (144) sur la base d'une interrogation des dispositifs de mesure de longueur (170, 172) au dispositif tampon de longueur de bande (142).

14. Dispositif selon l'une quelconque des revendications précédentes,

**caractérisé en ce que** le dispositif de commande (40, 140) est pourvu d'une unité d'entrée qui permet un effacement manuel d'un point de défaut détecté d'une mémoire par une personne de service, en particulier avant ou au moment d'atteindre la zone d'arrêt (44, 144).

15. Installation de tuftage (110) équipée d'un dispositif selon l'une quelconque des revendications précédentes.

16. Procédé de commande d'une installation de tuftage, en particulier selon l'une quelconque des revendications précédentes, dans lequel l'installation de tuftage présente une machine de tuftage pour fabriquer une bande de tuftage plate, un agencement de rouleaux pour guider la bande de tuftage, dans lequel l'agencement de rouleaux (18, 118) présente un dispositif tampon de longueur de bande variable (42, 142) pour effectuer en cas de besoin une stockage intermédiaire d'une section de bande de tuftage, auquel se raccorde une zone d'arrêt (44, 144), et un dispositif d'extraction de produit pour enrouler la bande de tuftage guidée par l'agencement de rouleaux, selon les étapes consistant à :

- surveiller l'apparition de types de défauts prédéterminés sur la bande de tuftage sortant de la machine de tuftage avec un dispositif de détection de défauts (52, 152) au moment ou presque au moment de quitter la machine de tuftage (12, 112) avant l'agencement de rouleaux (18, 118) et
- arrêter la bande de tuftage en réaction à une détection d'un point de défaut par le dispositif de détection de défauts (52, 152) dans la zone d'arrêt prédéterminée de l'agencement de rouleaux si le point de défaut détecté est à imputer au type de défaut prédéterminé comme défaut réparable et pénètre dans la zone d'arrêt, et
- arrêter immédiatement la machine de tuftage (12, 112) si le point de défaut détecté est à imputer au type de défaut prédéterminé comme défaut lourd,

dans lequel un dispositif de commande (40, 140) arrête le dispositif d'extraction de produit (20, 120) pour arrêter la bande de tuftage (14, 114) lors de l'entrée du point de défaut dans la zone d'arrêt prédéterminée (44, 144), dans lequel la machine de tuftage (12, 112) continue à opérer en remplissant le dispositif tampon de longueur de bande (42, 142).

Fig. 1

Fig. 2

EP 1 982 162 B1

**IN DER BESCHREIBUNG AUFGEFÜHRTE DOKUMENTE**

**In der Beschreibung aufgeführte Patentdokumente**

- US 5550384 A
- EP 0303722 A1
- DE 2920050 A1
- EP 0352655 A2
- JP 04240257 A